# EUROPEAN PATENT APPLICATION

(11) **EP 4 668 682 A1**
(43) Date of publication of application: **24.12.2025**
(21) Application number: 24769860.8
(22) Date of filing: 08.03.2024
(51) Int. Cl.: H04L 12/46

(54) **TUNNEL TECHNOLOGY-BASED PACKET PROCESSING METHOD AND APPARATUS**

(30) Priority: 10.03.2023 CN 202310231707; 16.11.2023 CN 202311531772
(71) Applicant: Huawei Cloud Computing Technologies Co., Ltd., Guiyang, Guizhou 550025 (CN)
(72) Inventor: GAO, Zhonghua, Guiyang, Guizhou 550025 (CN); ZHANG, Rui, Guiyang, Guizhou 550025 (CN); LEI, Yanle, Guiyang, Guizhou 550025 (CN)
(74) Representative: Goddar, Heinz J.
(86) International application number: PCT/CN2024/080686
(87) International publication number: WO 2024/188167

(57) **Abstract**

Embodiments of this application disclose a packet processing method based on a tunneling technology, to improve network connectivity when a network segment conflict exists in different network environments. The method in embodiments of this application includes: A cloud management platform obtains first tunnel information, where the first tunnel information includes a first tunnel destination IP address, and the first tunnel destination IP address is an IP address of a gateway. The cloud management platform establishes a first tunnel between a first network and the gateway based on the first tunnel information, a service packet generated in a running process of a first host is transmitted to the gateway through the first tunnel, and a destination IP address of the service packet is an IP address of a second host, where the first host is deployed in the first network, the second host is deployed in a second network, and a network address conflict exists between the first network and the second network. The gateway forwards the service packet to the second host based on the first tunnel information and the IP address of the second host.

## Description

This application claims priorities to Chinese Patent Application No. 202310231707.2, filed with the China National Intellectual Property Administration on March 10, 2023 and entitled "GATEWAY CONFIGURATION METHOD BASED ON TUNNELING TECHNOLOGY AND CLOUD MANAGEMENT PLATFORM", and to Chinese Patent Application No. 202311531772.3, filed with the China National Intellectual Property Administration on November 16, 2023 and entitled "PACKET PROCESSING METHOD AND APPARATUS BASED ON TUNNELING TECHNOLOGY", both of which are incorporated herein by reference in their entireties.

### TECHNICAL FIELD

Embodiments of this application relate to the computer field, and in particular, to a packet processing method and apparatus based on a tunneling technology.

### BACKGROUND

A network address translation (network address translation, NAT) gateway is a network device or a cloud service, and is configured to implement a network address translation function. The NAT gateway includes a public NAT gateway and a private NAT gateway. The public NAT gateway translates a private IP address in a virtual private cloud (virtual private cloud, VPC) into a public IP address to communicate with the internet. The private NAT gateway translates an IP address in the VPC, and translates a private IP address and a port into another private IP address and port.

In a process in which a current NAT gateway processes mutual access between two hosts in different network environments, when network segments of the hosts in the different network environments overlap, for example, because network segments of a network in which a private network VPC is located and a network in which a public network host is located overlap, a service packet sent from the private network VPC to the public network host may be discarded or abnormal during routing. As a result, the service packet cannot reach the NAT gateway, and network connectivity between the two hosts in the different network environments is poor.

### SUMMARY

An embodiment of this application provides a packet processing method based on a tunneling technology. When a first network sends, via a NAT gateway, a service packet to a second network that is not in a same network environment as the first network, the first network performs tunnel encapsulation on the service packet, so that the service packet can be routed to a NAT gateway corresponding to the second network. In this way, network connectivity is improved when a network segment conflict occurs in different network environments. Embodiments of this application further provide a packet processing apparatus, a computing device, a computing device cluster, a computer-readable storage medium, and a computer program product that correspond to the packet processing method based on a tunneling technology.

According to a first aspect, an embodiment of this application provides a packet processing method based on a tunneling technology. The method may be performed by a cloud management platform, or may be performed by a component of the cloud management platform, for example, a processor, a chip, or a chip system of the cloud management platform, or may be implemented by a logical module or software that can implement all or some functions of the cloud management platform. The method provided in the first aspect includes: The cloud management platform obtains first tunnel information, where the first tunnel information includes a first tunnel destination IP address, the first tunnel destination IP address is an IP address of a gateway, the cloud management platform is configured to manage an infrastructure that provides a cloud service, a first network is deployed on the infrastructure, and the first network and a second network are connected via the gateway, where a first host is deployed in the first network, a second host is deployed in the second network, and a network address conflict exists between the first network and the second network; the cloud management platform establishes a first tunnel between the first network and the gateway based on the first tunnel information, where a service packet generated in a running process of the first host is transmitted to the gateway through the first tunnel, and a destination IP address of the service packet is an IP address of the second host; and the cloud management platform sends the first tunnel information to the gateway, and the gateway forwards the service packet to the second host based on the first tunnel information and the IP address of the second host.

In this embodiment of this application, the cloud management platform can establish the first tunnel between the first network and the gateway, so that when a network segment conflict exists between the first network and the second network in different network environments, the service packet can still be sent to the gateway through the first tunnel for network address translation. In this way, network connectivity is improved when a network segment conflict occurs in different network environments.

In a possible implementation, the first tunnel information further includes a first tunnel identifier. The first tunnel identifier includes a tunnel destination IP address and/or a virtual network identifier VNI.

In this embodiment of this application, the cloud management platform can process, based on the tunnel identifier, the service packet transmitted between the first network and the second network. Therefore, when a network segment conflict exists between the first network and the second network in different network environments, the service packet can be routed to the NAT gateway for network address translation. This improves network connectivity when a network segment conflict exists in different network environments.

In a possible implementation, the second network is a public network. In a process in which the cloud management platform sends the service packet to the second network based on the first tunnel identifier, the gateway of the cloud management platform translates a source IP address of the service packet into a public IP address based on a gateway rule and the first tunnel identifier, and sends the service packet to the second network based on the public IP address.

In this embodiment of this application, the cloud management platform can process, based on the tunnel identifier, the service packet transmitted between the first network and the public network, so that when a network segment conflict exists between the first network and the public network, the service packet can also be routed to the gateway for network address translation. In this way, network connectivity is improved when a network segment conflict occurs in different network environments.

In a possible implementation, the second network is a private network. In a process in which the cloud management platform sends the service packet to the second network based on the first tunnel identifier, the gateway of the cloud management platform translates a source IP address of the service packet into a private IP address of the second network based on a gateway rule and the first tunnel identifier, and sends the service packet to the second network based on the private IP address of the second network.

In this embodiment of this application, the cloud management platform can process, based on the tunnel identifier, the service packet transmitted between the first network and the private network, so that when a network segment conflict exists between the first network and the private network, the service packet can also be routed to the gateway for network address translation. In this way, network connectivity is improved when a network segment conflict occurs in different network environments.

In a possible implementation, the first host is further configured to generate a service packet for accessing a third host, the third host is deployed in a third network, the third network is a private network, the first network and the third network are connected via the gateway, a network address conflict exists between the second network and the third network, and the gateway sends the service packet to the third network based on a second tunnel identifier in second tunnel information, where the second tunnel identifier includes a tunnel destination IP address and/or a virtual network identifier VNI, and the second tunnel identifier is different from the first tunnel identifier.

In this embodiment of this application, the cloud management platform can distinguish, based on different tunnel identifiers, different private networks whose network segments conflict. This improves network connectivity in different network environments.

In a possible implementation, when an IP address conflict exists between the second network and the third network, the gateway determines a first gateway interface based on the first tunnel identifier, and sends a service packet to the second network through the first gateway interface. The gateway determines a second gateway interface based on the second tunnel identifier, and sends a service packet to the third network through the second gateway interface, where the first gateway interface is different from the second gateway interface.

In this embodiment of this application, the cloud management platform can configure the gateway to send, through different gateway interfaces, service packets to different private networks whose network segments conflict. This improves network connectivity in different network environments.

In a possible implementation, the first network includes a virtual private cloud VPC network.

The packet processing method based on a tunneling technology provided in this embodiment of this application may be applied to a virtual private cloud. This improves richness of the solution.

In a possible implementation, the first host includes a virtual machine or a container.

The packet processing method based on a tunneling technology provided in this embodiment of this application may be applied to different types of hosts. This improves richness of the solution.

In a possible implementation, the cloud management platform creates a network address translation NAT gateway in the infrastructure, the NAT gateway is connected to the first network, the NAT gateway is configured to forward a service packet between at least one host and the second network, the second network includes a public network and another private network other than the first network, and the first network and the second network are in different network environments. The cloud management platform determines an identifier of a tunnel between the first network and the NAT gateway, where the tunnel identifier is used to identify the second network in which a network segment conflict exists, and the tunnel identifier includes a tunnel destination IP address or a virtual network identifier VNI. The cloud management platform configures the gateway to process the service packet based on the tunnel identifier.

In this embodiment of this application, the cloud management platform can process, based on the tunnel identifier, the service packet transmitted between the first network and the second network. Therefore, when a network segment conflict exists between the first network and the second network in different network environments, the service packet can be routed to the gateway for network address translation. This improves network connectivity when a network segment conflict exists in different network environments.

In some possible implementations, in a process in which the cloud management platform processes the service packet based on the tunnel identifier, the cloud management platform performs tunnel encapsulation on the service packet based on the tunnel identifier, to obtain a tunnel-encapsulated service packet, where the tunnel-encapsulated service packet is transmitted between the first network and the NAT gateway.

In this embodiment of this application, the cloud management platform can perform, based on the tunnel identifier, tunnel encapsulation on the service packet transmitted by the first network and the NAT gateway, so that the service packet obtained after the tunnel encapsulation can be routed from the first network to the NAT gateway. This improves network connectivity when a network segment conflict exists in different network environments.

In some possible implementations, the service packet is an outbound service packet. When the first network sends the outbound service packet to the second network via the NAT gateway, the first network performs tunnel encapsulation on the outbound service packet based on the tunnel identifier, to obtain a tunnel-encapsulated outbound service packet.

In this embodiment of this application, when the first network sends the outbound service packet to the second network, the first network can perform tunnel encapsulation on the outbound service packet based on the tunnel identifier, so that when a network segment conflict exists between the first network and the second network, the service packet can be sent to the NAT gateway corresponding to the second network. This improves network connectivity between the first network and the second network.

In some possible implementations, after the first network obtains the tunnel-encapsulated outbound service packet, the first network sends the tunnel-encapsulated outbound service packet to the NAT gateway. The NAT gateway performs tunnel decapsulation on the tunnel-encapsulated outbound service packet to obtain the outbound service packet. The NAT gateway translates a source IP address of the outbound service packet into a first IP address according to a source address translation rule, where the first IP address is an IP address in a network environment in which the second network is located. The NAT gateway sends the outbound service packet obtained after the source address translation to the second network.

The NAT gateway provided in this embodiment of this application can perform tunnel decapsulation on the outbound service packet, and translate the source IP address of the service packet into the IP address in the network environment in which the second network is located. This improves network connectivity between the first network and the second network.

In some possible implementations, the service packet is a return service packet, and the NAT gateway receives the return service packet sent by the second network. The NAT gateway translates a destination IP address of the return service packet into a second IP address according to a destination address translation rule, to obtain the return service packet obtained after the address translation, where the second IP address is the IP address of the first network. The destination IP address of the return service packet is the first IP address, and the second IP address is the source IP address of the outbound service packet.

In this embodiment of this application, when the second network sends the return service packet to the first packet, the NAT gateway can obtain a corresponding destination address translation rule according to a source address translation rule of the outbound service packet, and the NAT gateway translates the destination IP address of the return service packet into the IP address of the first network. This improves network connectivity between the first network and the second network.

In some possible implementations, when the first network receives, via the NAT gateway, the return service packet sent by the second network, the NAT gateway performs, based on the tunnel identifier, tunnel encapsulation on the return service packet obtained after the address translation, to obtain the return service packet obtained after the tunnel encapsulation.

The NAT gateway provided in this embodiment of this application can perform tunnel encapsulation on the return service packet, and send the tunnel-encapsulated service packet to the first network. This improves network connectivity between the first network and the second network.

In some possible implementations, the second network is a public network host, and a network segment conflict exists between the public network host and the first network. When the first network sends the outbound service packet to the public network host via the NAT gateway, the first network performs tunnel encapsulation on the outbound service packet based on the tunnel identifier, to obtain the tunnel-encapsulated outbound service packet. The first network sends the tunnel-encapsulated outbound service packet to the NAT gateway. The NAT gateway performs tunnel decapsulation on the tunnel-encapsulated outbound service packet to obtain the outbound service packet. The NAT gateway translates a source IP address of the outbound service packet into a first IP address according to a source address translation rule, where the first IP address is a public IP address. The NAT gateway sends the outbound service packet obtained after the source address translation to the public network host.

When the first network receives, via the NAT gateway, the return service packet sent by the public network host, the NAT gateway translates the destination IP address of the return service packet into the IP address of the first network according to the destination address translation rule, to obtain the return service packet obtained after the address translation. The NAT gateway performs, based on the tunnel identifier, tunnel encapsulation on the return service packet obtained after the address translation, to obtain the return service packet obtained after the tunnel encapsulation, and sends the return service packet to the first network.

In this embodiment of this application, when a network segment conflict exists between a network segment in which the first network is located and a network segment in which the public network host is located, the first network can perform tunnel encapsulation on the service packet based on the tunnel identifier and transmit the service packet to the NAT gateway corresponding to the public network host, to avoid a transmission exception of the service packet caused by the network segment conflict, and improve network connectivity between the first network and the public network host.

In some possible implementations, the network address translation system further includes a third network, the first network, the second VPC, and the third network are in different network environments, the tunnel identifier includes a first tunnel destination IP address and a second tunnel destination IP address, the first tunnel destination IP address is used to identify the second network, the second tunnel destination IP address is used to identify the third network, and the first network sends a service packet to the second network based on the first tunnel destination IP address. Specifically, the first network performs tunnel encapsulation on the service packet based on the first tunnel destination IP address. In this way, the service packet after the tunnel encapsulation can be routed, based on the first tunnel destination IP address, to a NAT gateway corresponding to the second network. The first network sends the service packet to the third network based on the second tunnel destination IP address. The first network performs tunnel encapsulation on the service packet based on the second tunnel destination IP address, so that the service packet after the tunnel encapsulation can be routed, based on the second tunnel destination IP address, to a NAT gateway corresponding to the third network.

In this embodiment of this application, the first network can send the service packet to NAT gateways corresponding to different network pairs based on different tunnel destination IP addresses, so that network connectivity between VPCs in different network environments is improved.

In some possible implementations, the network address translation system further includes a third network, an IP address conflict exists between the second network and the third network, the tunnel identifier includes a first VNI and a second VNI, the first VNI is used to identify the second network, and the second VNI is used to identify the third network. The first network sends a service packet to the second network based on the first VNI. Specifically, the first network identifies, based on the first VNI identifier, the second network and the third network that have a network segment conflict, and the first network sends a service packet to the third network based on the second VNI.

In this embodiment of this application, when the first network can identify, based on different VNIs, a private network in which a network segment conflict exists, and perform tunnel encapsulation on the service packet based on the VNI, the NAT gateway can identify a destination VPC of the service packet based on the VNI. This improves service packet transmission accuracy.

According to a second aspect, an embodiment of this application provides a packet processing apparatus based on a tunneling technology. The apparatus includes an obtaining unit and a processing unit. The obtaining unit is configured to obtain first tunnel information, where the first tunnel information includes a first tunnel destination IP address, the first tunnel destination IP address is an IP address of the gateway, the cloud management platform is configured to manage an infrastructure that provides a cloud service, a first network is deployed on the infrastructure, and the first network and a second network are connected via the gateway, where a first host is deployed in the first network, a second host is deployed in the second network, and a network address conflict exists between the first network and the second network. The processing unit is configured to establish a first tunnel between the first network and the gateway based on the first tunnel information, where a service packet generated in a running process of the first host is transmitted to the gateway through the first tunnel, and a destination IP address of the service packet is an IP address of the second host. The processing unit is further configured to forward the service packet to the second host based on the first tunnel information and the IP address of the second host.

In a possible implementation, the first tunnel information further includes a first tunnel identifier, and the first tunnel identifier includes a tunnel destination IP address and/or a virtual network identifier VNI.

In a possible implementation, the second network is a public network, and the processing unit is further configured to: translate a source IP address of the service packet into a public IP address based on the first tunnel identifier; and send the service packet to the second network based on the public IP address.

In a possible implementation, the second network is a private network, and the processing unit is further configured to: translate a source IP address of the service packet into a private IP address of the second network based on the first tunnel identifier, and send the service packet to the second network based on the private IP address of the second network.

In a possible implementation, the first host is further configured to generate a service packet for accessing a third host, the third host is deployed in a third network, the third network is a private network, the first network and the third network are connected via a gateway, and a network address conflict exists between the second network and the third network. The processing unit is further configured to: establish a second tunnel between the first network and the gateway based on second tunnel information, and send the service packet to the third network based on a second tunnel identifier in the second tunnel information, where the second tunnel identifier includes a tunnel destination IP address and/or a virtual network identifier VNI, and the second tunnel identifier is different from the first tunnel identifier.

In a possible implementation, the processing unit is further configured to: determine a first gateway interface based on the first tunnel identifier, and send a service packet to the second network through the first gateway interface; and determine a second gateway interface based on the second tunnel identifier, and send a service packet to the third network through the second gateway interface, where the first gateway interface is different from the second gateway interface.

In a possible implementation, the first network includes a virtual private cloud VPC network.

In a possible implementation, the first host includes a virtual machine or a container.

A third aspect in embodiments of this application provides a computing device. The computing device includes a processor, the processor is coupled to a memory, and the processor is configured to store instructions. When the instructions are executed by the processor, the computing device is enabled to perform the method according to any one of the first aspect or the possible implementations of the first aspect.

A fourth aspect in embodiments of this application provides a computing device cluster, where the computing device cluster includes one or more computing devices, the computing device includes a processor, the processor is coupled to a memory, the processor is configured to store instructions, and when the instructions are executed by the processor, the computing device cluster is enabled to perform the method according to any one of the first aspect or the possible implementations of the first aspect.

A fifth aspect in embodiments of this application provides a computer-readable storage medium storing instructions. When the instructions are executed, a computer is enabled to perform the method according to any one of the first aspect or the possible implementations of the first aspect.

A sixth aspect in embodiments of this application provides a computer program product, where the computer program product includes instructions, and when the instructions are executed, a computer is enabled to implement the method according to any one of the first aspect or the possible implementations of the first aspect.

A seventh aspect in embodiments of this application provides a packet processing method. The method may be applied to a cloud management platform, and the method specifically includes the following steps. The cloud management platform obtains first tunnel information, where the first tunnel information includes a first tunnel destination IP address, the first tunnel destination IP address is an IP address of a gateway, the cloud management platform is configured to manage an infrastructure that provides a cloud service, a first network is deployed on the infrastructure, the first network and a second network are connected via the gateway, a first host is deployed in a first network, a second host is deployed in a second network, and a network address conflict exists between the first network and the second network. The cloud management platform establishes a first tunnel between the first network and the gateway based on first tunnel information, and a service packet generated in a running process of the first host is transmitted to the gateway through the first tunnel. A destination IP address of the service packet is an IP address of the second host, and the cloud management platform configures the gateway to forward the service packet to the second host based on the first tunnel destination IP address and the IP address of the second host.

It may be understood that, for beneficial effects that can be achieved by any one of the foregoing packet processing apparatuses based on a tunneling technology, computing devices, computing device clusters, computer-readable medium, computer program products, or the like, refer to beneficial effects in a corresponding method. Details are not described herein again.

### BRIEF DESCRIPTION OF DRAWINGS

FIG. 1a is a diagram of a system architecture of a network address translation system according to an embodiment of this application;
FIG. 1b is a diagram of a system architecture of a network address translation system according to an embodiment of this application;
FIG. 2 is a schematic flowchart of a packet processing method based on a tunneling technology according to an embodiment of this application;
FIG. 3a is a diagram of configuring a routing table according to an embodiment of this application;
FIG. 3b is a diagram of performing packet processing based on a tunnel identifier according to an embodiment of this application;
FIG. 4 is another diagram of performing packet processing based on a tunnel identifier according to an embodiment of this application;
FIG. 5 is another diagram of performing packet processing based on a tunnel identifier according to an embodiment of this application;
FIG. 6 is another diagram of performing packet processing based on a tunnel identifier according to an embodiment of this application;
FIG. 7 is a diagram of a structure of a packet processing apparatus according to an embodiment of this application;
FIG. 8 is a diagram of a structure of a computing device according to an embodiment of this application;
FIG. 9 is a diagram of a structure of a computing device cluster according to an embodiment of this application; and
FIG. 10 is a diagram of a structure of another computing device cluster according to an embodiment of this application.

### DESCRIPTION OF EMBODIMENTS

Embodiments of this application provide a packet processing method and apparatus based on a tunneling technology, to improve network connectivity when a network segment conflict exists in different network environments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, a word "example", "for example", or the like is used to give an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

First, some terms in embodiments of this application are described, to help a person skilled in the art understand the technical solutions.

A virtual private cloud (virtual private cloud, VPC) is a virtual network environment created on a cloud management platform. Users can set a host in the VPC. The host includes a virtual machine, a container, or the like. The VPC further provides flexible network configuration and isolation, allowing users to customize their network topologies to meet requirements of applications.

Network address translation (network address translation, NAT) is a network address translation technology used to translate IP addresses between different networks. The network address translation is usually used to connect a private network to a public network, to translate an internal IP address on the private network into a public IP address or translate a public IP address in the public network into a private IP address.

Virtual routing and forwarding (virtual routing and forwarding, VRF) refers to creating a plurality of logically isolated routing instances on a single physical network device. Each VRF routing instance has an independent routing table and forwarding rule, so that network traffic between different VRF routing instances is isolated from each other, and different VRF routing instances are allowed to use a same IP address range.

To make the technical solutions of this application clearer and easier to understand, the following describes a system architecture of this application with reference to the accompanying drawings.

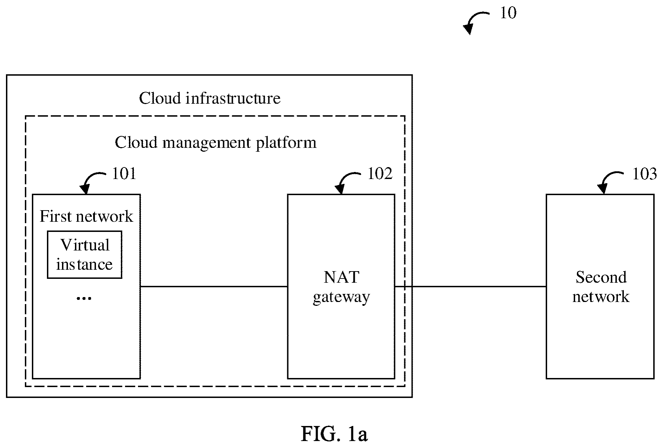

FIG. 1a is a diagram of a system architecture of a network address translation system according to an example of this application. In an example shown in FIG. 1a, a network address translation system 10 includes a first network 101, a NAT gateway 102, and a second network 103, where the first network 101 is connected to the second network 103 via the NAT gateway 102. The following describes functions of each part in detail.

The first network 101 is a virtual network environment deployed on a cloud service infrastructure. At least one host is disposed in the first network 101, and the host includes a virtual machine VM and a container. The at least one host in the first network 101 can send a service packet to the second network 103 via the NAT gateway 102, or receive a service packet from the second network 103 via the NAT gateway 102.

The NAT gateway 102 is configured to perform translation between a first network IP address and a second network IP address. When both the first network and the second network are private networks, the NAT gateway 102 may be referred to as a private NAT gateway. When the first network is a private network and the second network is a public network, the NAT gateway 102 may be referred to as a public NAT gateway. An address translation function provided by the NAT gateway 102 includes source network address translation SNAT and destination network address translation DNAT. The following separately provides descriptions.

In the source network address translation SNAT, because an SNAT rule is preconfigured in the NAT gateway 102, the NAT gateway 102 translates the first network IP address into the second network IP address according to the SNAT rule, so that one or more hosts in the first network 101 access the second network 103 by using the second network IP address.

In the destination network address translation DNAT, the NAT gateway 102 may also translate the second network IP address into the first network IP address according to a preconfigured DNAT rule, so that a host in the second network 103 accesses the first network 101.

It should be noted that the first network 101 and the NAT gateway 102 are deployed in an infrastructure that provides a cloud service, and the infrastructure that provides the cloud service is managed by a cloud management platform. The infrastructure refers to physical devices that constitute a cloud computing infrastructure, including a server, a storage device, a network device, and the like in a cloud data center. The cloud management platform allocates, schedules, and monitors resources by managing the infrastructure. The cloud management platform further provides a centralized page for users to control and monitor cloud resources. The second network 103 may be a public network, or may be a private network. The public network refers to a network connected to the public internet, and the public network includes various public network hosts, for example, a web page Web server. In the public network, the public network hosts use public IP addresses to communicate with each other. When a host in the first network 101 needs to communicate with a public network host in the public network, the host in the first network 101 needs to send a service packet to the NAT gateway 102 corresponding to the public network host, and the NAT gateway 102 performs network address translation and then transmits the service packet to the public network host in the public network.

When the second network 103 is a private network, the second network 103 may alternatively be a virtual network environment deployed on a cloud service infrastructure. At least one host is disposed in the second network 103, and the host includes a virtual machine VM and a container.

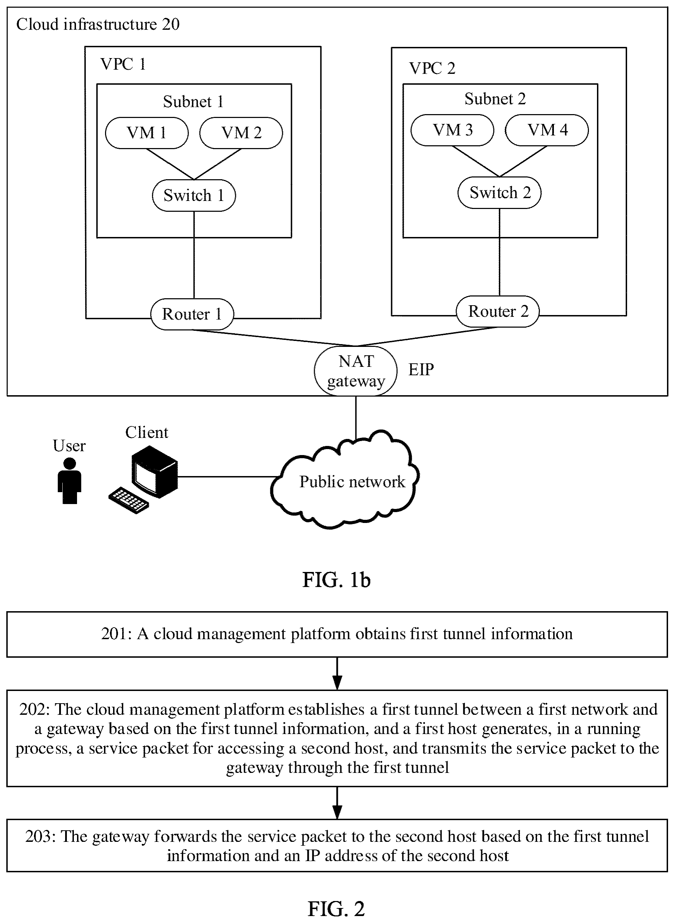

FIG. 1b is a diagram of another system architecture of a network address translation system according to an embodiment of this application. In an example of the network address translation system shown in FIG. 1b, the cloud service infrastructure is a cloud computing data center, the first network is a virtual private cloud VPC 1, and the second network may be a virtual private cloud VPC 2 or a public network. Hosts in the VPC 1 can access the VPC 2 or the public network via the NAT gateway. The hosts in the VPC 1 are, for example, a virtual machine VM 1 and a virtual machine VM 2, and the hosts in the VPC 2 are, for example, a virtual machine VM 3 and a virtual machine VM 4.

In the example shown in FIG. 1b, the VPC 1, the VPC 2, and the public network are three different network environments. When the host in the VPC 1 accesses the VPC 2 or the public network, the NAT gateway needs to perform network address translation. When the host in VPC 1 accesses the public network, the NAT gateway needs to translate a private IP address in the VPC 1 into a public IP address. When the host in the VPC 1 accesses the VPC 2, the NAT gateway needs to translate a private IP address in a network environment of the VPC 1 into a private IP address in a network environment of the VPC 2.

It may be understood that the VPC 1 and the VPC 2 in the example shown in FIG. 1b may alternatively be deployed in virtual private clouds in different cloud computing data centers. This is not specifically limited.

Based on the network address translation system 10 shown in FIG. 1a and FIG. 1b, this application further provides a network address translation method. The following describes, with reference to embodiments, the network address translation method provided in embodiments of this application.

FIG. 2 is a schematic flowchart of a network address translation method according to an embodiment of this application. In an example shown in FIG. 2, the method includes the following steps.

201: A cloud management platform obtains first tunnel information.

The cloud management platform obtains the first tunnel information, where the first tunnel information includes a first tunnel destination IP address, and the first tunnel destination IP address is an IP address of a NAT gateway. The cloud management platform can manage an infrastructure that provides a cloud service. A first network is deployed on the infrastructure, the first network is connected to a second network via a gateway, a first host is deployed in the first network, a second host is deployed in the second network, and a network address conflict exists between the first network and the second network.

In this embodiment of this application, because a network conflict may exist between the first network and the second network, a network conflict may also exist between a plurality of different second networks. That the network conflict exists between the first network and the second network includes that a network segment conflict exists between the first network and the second network, or a network address conflict exists between a host in the first network and a host in the second network.

For example, when the first network is a first VPC, and the second network is a public network, an IP address of the first host in the first VPC is "11.1.0.3", an IP address of a public network host in the public network is "11.1.0.101", and the first VPC and the public network host are in different network environments. However, both the first host in the first VPC and the public network host belong to a "11.1.0.x/24" network segment, that is, a network segment conflict exists between a network environment in which the first VPC is located and a network environment in which the public network host is located.

For another example, when the second network is a second VPC, and the third network is a third VPC that are different, network environments in which the second VPC and the third VPC are located are different network environments. An IP address of a second host in the second VPC is "11.1.0.101". An IP address of a third host in the third VPC is also "11.1.0.101". An IP address conflict exists between the IP address of the second VPC and the IP address of the third VPC.

202: The cloud management platform establishes a first tunnel between the first network and the gateway based on the first tunnel information, and the first host generates, in a running process, a service packet for accessing the second host, and transmits the service packet to the gateway through the first tunnel.

When a network segment conflict exists between the first network and the second network, to make the service packet sent by the first host in the first network to the second network to be routed to the NAT gateway, the cloud management platform establishes the first tunnel between the first network and the NAT gateway based on the first tunnel information, and the first host generates, in the running process, the service packet for accessing the second host, and transmits the service packet to the gateway through the first tunnel. The first host in the first network sends the service packet to the NAT gateway through the first tunnel. Details are as follows:

After the cloud management platform obtains the first tunnel information, the cloud management platform establishes the first tunnel between the first network and the gateway based on the first tunnel information. The first host generates, in a running process, a service packet for accessing the second host, and transmits the service packet to the gateway through the first tunnel. Specifically, the first host in the first network encapsulates the service packet based on the first tunnel information to obtain an encapsulated service packet, and sends the encapsulated service packet to the NAT gateway. The first tunnel information further indicates that the service packet is encapsulated into the encapsulated service packet, and the encapsulated service packet is sent to the gateway through the first tunnel. The first tunnel is connected to the NAT gateway. The first tunnel information includes one or more of the following: a source address, a destination address, a port number, a protocol type, routing information, and a tunnel identifier.

In a possible implementation, before the first host in the first network sends the service packet to the NAT gateway through the first tunnel, the cloud management platform creates a network address translation NAT gateway in the infrastructure, where the NAT gateway is configured to forward the service packet between the first network and the second network, the first network and the second network are different network environments, and the second network includes a public network and a private network. The NAT gateway includes a public NAT gateway and a private NAT gateway. When the second network is a public network host, the NAT gateway is a public NAT gateway. When the second network is a private network, the NAT gateway is a private NAT gateway.

In a possible implementation, the cloud management platform obtains a gateway rule. The gateway rule includes a source network address translation SNAT rule and a destination network address translation DNAT rule. The source network address translation SNAT rule refers to translating a source address of an outbound service packet into an address of a network in which the second host is located, and the destination network address translation DNAT rule refers to translating a destination address of a return service packet into an address of a network in which the first host is located. The gateway rule is further used to indicate the NAT gateway to obtain a first tunnel identifier in the service packet, and the first tunnel identifier includes a tunnel destination IP address and/or a virtual network identifier VNI.

In a possible implementation, the cloud management platform sends the gateway rule to the NAT gateway, so that the NAT gateway forwards the service packet according to the gateway rule. Specifically, the NAT gateway obtains the first tunnel identifier in the service packet according to the gateway rule. The service packet is an encapsulated service packet encapsulated with the first tunnel identifier. The NAT gateway determines, based on the first tunnel identifier, that a destination host of the service packet is the second host.

In a possible implementation, after sending the gateway rule to the NAT gateway, the cloud management platform configures the NAT gateway according to the gateway rule. Specifically, when the first network needs to access the second network, the cloud management platform needs to configure a source address translation SNAT rule of the NAT gateway. In a process of configuring the SNAT rule, the cloud management platform needs to specify a source IP address range for source address translation and a translated IP address. When the first network serves as a serving end to provide a service for the second network, the cloud management platform needs to configure a destination address translation DNAT rule of the NAT gateway. In a process of configuring the DNAT rule, the cloud management platform needs to specify a destination IP address and a port for destination address translation, and a translated IP address and port of the first network.

Table 1 is a schematic table of a source address translation SNAT rule according to an embodiment of this application. In the SNAT rule shown in Table 1, the NAT gateway translates a private IP address into a public IP address, and the translated public IP address corresponding to the private IP address "11.1.0.3" is "124.1.0.100." A port 10000 before NAT gateway address translation corresponds to a port 5001 after NAT gateway address translation.

**Table 1**

| IP address before NAT | Port before NAT | Public IP after NAT | Port after NAT | Public network destination address | Public network port |
|---|---|---|---|---|---|
| 11.1.0.3 | 10000 | 124.1.0.100 | 5001 | 11.1.0.101 | 443 |

Table 2 is a schematic table of a destination address translation DNAT rule according to an embodiment of this application. In the DNAT rule shown in Table 2, the NAT gateway translates a public IP address into a private IP address, and the translated private IP address corresponding to the public IP address "124.1.0.101" is "11.1.0.3". A port 443 before NAT gateway address translation corresponds to a port 5000 after NAT gateway address translation.

**Table 2**

| IP address before NAT | Port before NAT | IP address after NAT | Port after NAT |
|---|---|---|---|
| 124.1.0.101 | 443 | 11.1.0.3 | 5000 |

In a possible implementation, the NAT gateway can learn a source address translation session of the outbound service packet in a process of processing the outbound service packet from the first network to the second network, so that the return service packet can match a private IP address of the first network, and the return service packet is forwarded to the first network.

In a possible implementation, in a process of configuring the NAT gateway by the cloud management platform, a tunnel identifier between the first network and the NAT gateway further needs to be configured, where the tunnel identifier is used to identify the second network in which a network segment conflict exists, and the tunnel identifier includes a tunnel destination IP address or a virtual network identifier VNI. The service packet received by the NAT gateway is a service packet encapsulated by the first host, the encapsulated service packet includes a first tunnel identifier, and the first tunnel identifier includes a tunnel destination IP address and/or a virtual network identifier VNI. For example, the tunnel destination IP address is 11.1.0.2, and the virtual network identifier is 1000.

The tunnel identifier is further used to determine a service packet transmission tunnel between the first network and the NAT gateway. The transmission tunnel between the first network and the NAT gateway includes a virtual extensible local area network (virtual extensible LAN, VXLAN) tunnel. After configuration, the NAT gateway can perform tunnel encapsulation or tunnel decapsulation on the service packet based on the tunnel identifier.

203: The gateway forwards the service packet to the second host based on the first tunnel information and a second host IP address.

The first host and the NAT gateway in the first network process the service packet based on the tunnel identifier. Specifically, the first host in the first network performs tunnel encapsulation on the service packet based on the tunnel identifier to obtain a tunnel-encapsulated service packet, namely, an encapsulated service packet, and transmits the encapsulated service packet between the first network and the NAT gateway, and the NAT gateway decapsulates the encapsulated service packet and performs network address translation according to an address translation rule.

The NAT gateway sends the service packet to the second network based on the first tunnel identifier. Specifically, after receiving the tunnel-encapsulated service packet, the NAT gateway may determine, based on the first tunnel identifier, that the tunnel-encapsulated service packet is from the first network, where the first tunnel identifier is a tunnel destination IP address. After decapsulating the encapsulated service packet that is sent by the first host in the first network through the first tunnel, the NAT gateway obtains a service packet, where a destination IP address of the service packet is an IP address of the second host in the second network. The NAT gateway performs network address translation on the service packet according to an address translation rule, and sends the service packet obtained after the address translation to the second network.

With reference to transmission procedures of the outbound service packet and the return service packet, the following describes a process in which the NAT gateway processes the service packet based on the tunnel identifier.

When the first network sends the outbound service packet to the second network via the NAT gateway, the first network performs tunnel encapsulation on the outbound service packet based on the tunnel identifier, to obtain a tunnel-encapsulated outbound service packet. The first network sends the tunnel-encapsulated outbound service packet to the NAT gateway. The NAT gateway performs tunnel decapsulation on the tunnel-encapsulated outbound service packet to obtain the outbound service packet. The NAT gateway translates a source IP address of the outbound service packet into a first IP address according to a source address translation rule, where the first IP address is an IP address in the second network. The NAT gateway sends the outbound service packet obtained after the source address translation to the second network.

It should be noted that, before the first network sends the outbound service packet to the second network, a routing table needs to be configured and a tunnel between the first network and the NAT gateway needs to be created. The tunnel between the first network and the NAT gateway may be a general routing (General Routing Encapsulation, GRE) tunnel, or may be a VXLAN tunnel. This is not specifically limited. In this embodiment of this application, a VXLAN tunnel is used as an example for description.

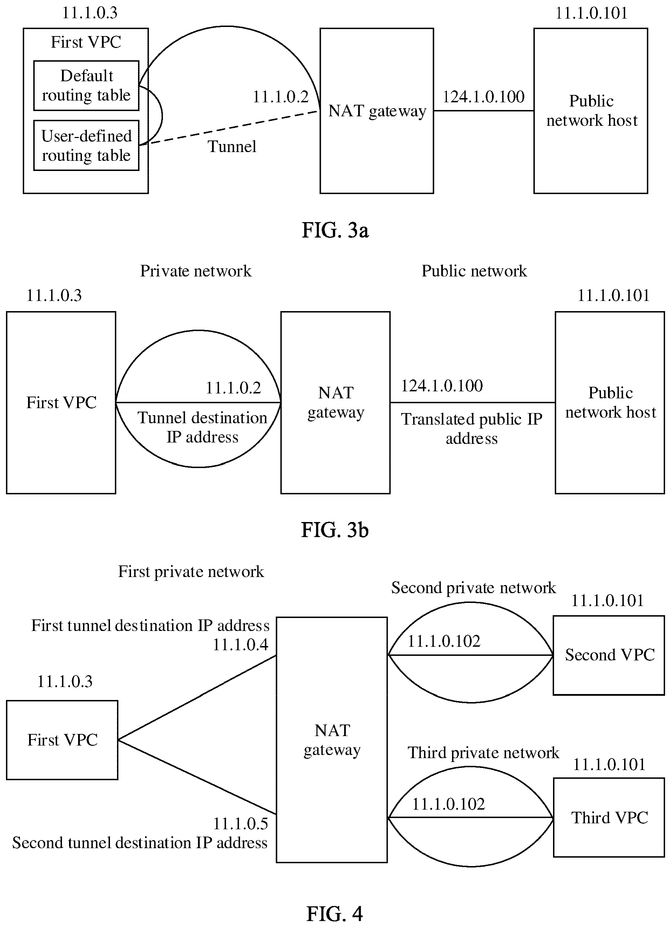

FIG. 3a is a diagram of configuring a routing table according to an embodiment of this application. In an example shown in FIG. 3a, the first network is a first VPC, and the second network is a public network. Before the first VPC sends a service packet to a public network host, the cloud management platform creates a user-defined routing table in the first VPC, and adds a routing rule from the first VPC to the NAT gateway. The first VPC can send an outbound service packet to the NAT gateway based on the user-defined routing table.

It should be noted that, before the cloud management platform creates the user-defined routing table in the first VPC, a user needs to configure the user-defined routing table on the cloud management platform. The user further needs to configure a binding relationship between a socket (socket) of a first host in the first VPC and a tunnel interface.

In the example shown in FIG. 3a, the first VPC further includes a default routing table. The default routing table is a routing table automatically generated when the VPC is created. The default routing table provides an initial routing rule for a host in the VPC, to implement basic network communication between subnets and access to the internet.

FIG. 3b is a diagram of a packet processing method based on a tunneling technology according to an embodiment of this application. In an example shown in FIG. 3b, the first network is a first VPC, and the second network is a public network. A service packet needs to be transmitted between the first VPC and a public network host. An IP address of the first VPC is "11.1.0.3", and an IP address of the public network host is "11.1.0.101". Because the IP addresses of the first VPC and the public network host in different network environments are in a "11.1.0.x/24" network segment, and a network segment conflict exists, the service packet sent by the first VPC cannot be routed to the NAT gateway corresponding to the public network host, and the first VPC needs to perform tunnel encapsulation on the service packet based on a tunnel identifier, and sends a service packet to the NAT gateway.

In the example shown in FIG. 3b, when the first VPC sends an outbound service packet to the public network host with a network segment conflict, a packet format of an original outbound service packet is shown in Table 3.

**Table 3**

| Source IP address: Port | Destination IP address: Port | Packet payload (payload) |
|---|---|---|
| 11.1.0.3:10000 | 11.1.0.101:443 | ---- |

In the example shown in FIG. 3b, when the first VPC sends the outbound service packet to the public network host with a network segment conflict, tunnel encapsulation needs to be performed on the original outbound service packet based on a tunnel identifier. A packet format of the outbound service packet obtained after the tunnel encapsulation is shown in Table 4.

**Table 4**

| Tunnel source IP address | Tunnel destination IP address | VxLAN header | Source IP address: Port | Destination IP address: Port | Packet payload (payload) |
|---|---|---|---|---|---|
| 11.1.0.3 | 11.1.0.2 | ---- | 11.1.0.3:10000 | 11.1.0.101:443 | ---- |

It can be seen from the outbound service packet after the tunnel encapsulation shown in Table 4 that the tunnel source IP address of the outbound service packet after the tunnel encapsulation is "11.1.0.3", namely, an IP address of the first VPC, and the tunnel destination IP address of the outbound service packet after the tunnel encapsulation is "11.1.0.2", namely, an IP address of the NAT gateway. The first VPC can perform tunnel encapsulation on the outbound service packet based on the tunnel destination IP address. In this way, the service packet after the tunnel encapsulation can be routed to the NAT gateway corresponding to the public network host.

In the example shown in FIG. 3b, after receiving the tunnel-encapsulated outbound service packet, the NAT gateway performs tunnel decapsulation on the tunnel-encapsulated outbound service packet, and performs address translation on the tunnel-decapsulated outbound service packet, a source IP address of the service packet is translated into a public IP address according to a preconfigured SNAT rule, that is, the source IP address 11.1.0.3 of the outbound service packet is translated into the public IP address 11.1.0.101, and a port 10000 of the outbound service packet is translated into a port 5001. The NAT gateway sends the outbound service packet obtained after the address translation to the public network host. A packet format of the outbound service packet obtained after the NAT gateway performs tunnel decapsulation and address translation is shown in Table 5.

**Table 5**

| Source IP address: Port | Destination IP address: Port | Packet payload (payload) |
|---|---|---|
| 124.1.0.100:5001 | 11.1.0.101:443 | ---- |

When the second network sends a return service packet to the first network via the NAT gateway, the NAT gateway receives the return service packet sent by the second network, and the NAT gateway learns a destination address matching relationship of the return service packet based on a source address translation session of the outbound service packet, and translates a destination IP address of the return service packet into an IP address of the first VPC based on the destination address matching relationship, to obtain the return service packet obtained after the address translation. The NAT gateway performs, based on a tunnel identifier, tunnel encapsulation on the return service packet obtained after the address translation, to obtain the return service packet obtained after the tunnel encapsulation. The NAT gateway sends the tunnel-encapsulated service packet to the first network.

Still refer to FIG. 3b. In the example shown in FIG. 3b, the first network is a first VPC, and the second network is a public network. The public network host sends a return service packet to the first VPC. A packet format of the return service packet is shown in Table 6. A source IP address "11.1.0.101" of the return service packet is an IP address of the public network host, and a destination IP address "124.1.0.100" of the return service packet is a public IP address corresponding to the first VPC.

**Table 6**

| Source IP address: Port | Destination IP address: Port | Packet payload (payload) |
|---|---|---|
| 11.1.0.101:443 | 124.1.0.100:5001 | ---- |

In the example shown in FIG. 3b, after receiving the return service packet sent by the public network host, the NAT gateway translates the public IP address "124.1.0.100" into a private IP address "11.1.0.3" of the first VPC according to a DNAT rule. In addition, a port 5001 corresponding to the public IP address 124.1.0.100 is translated into a port 10000. The NAT gateway performs tunnel encapsulation on the return service packet obtained after destination address translation. A packet format of the return service packet after the tunnel encapsulation is shown in Table 7.

**Table 7**

| **Tunnel** source IP address | Tunnel destination IP address | VxLAN header | Source IP address: Port | Destination IP address: Port | Packet payload (payload) |
|---|---|---|---|---|---|
| 11.1.0.2 | 11.1.0.3 | | 11.1.0.101:443 | 11.1.0.3:10000 | ---- |

In the example shown in FIG. 3b, after receiving the tunnel-encapsulated return service packet sent by the NAT gateway, the first VPC performs tunnel decapsulation on the tunnel-encapsulated return service packet to obtain the return service packet. In this way, bidirectional communication between the first VPC and the public network host is completed. A packet format of the return service packet after the tunnel decapsulation is shown in Table 8.

**Table 8**

| Source IP address: Port | Destination IP address: Port | Packet payload (payload) |
|---|---|---|
| 11.1.0.101:443 | 11.1.0.3:10000 | ---- |

The embodiment shown in FIG. 3b describes a process in which the cloud management platform processes, based on the tunnel identifier, a service packet transmitted between the first VPC and the public network host when a network segment conflict exists between the first VPC and the public network host. The following describes, with reference to the accompanying drawings, a process in which a service packet is transmitted between the first network and another private network.

FIG. 4 is a diagram of another packet processing method based on a tunneling technology according to an embodiment of this application. In an example shown in FIG. 4, the first network is a first VPC, and the second network and a third network are respectively a second VPC and a third VPC. The first VPC, the second VPC, and the third VPC are in different network environments, and an IP address of the second VPC is the same as an IP address of the third VPC. For example, IP addresses of the second VPC and the third VPC are "11.1.0.101".

In the example shown in FIG. 4, when a service packet is transmitted between the first VPC and the second VPC or the third VPC, because the IP addresses of the second VPC and the third VPC are the same, the first VPC distinguishes between different VPCs based on different tunnel identifiers. For example, the tunnel identifiers include a first tunnel destination address and a second tunnel destination address, the first tunnel destination address is "11.1.0.4", and the second tunnel destination address is "11.1.0.5". The first tunnel destination address identifies the second VPC, and the second tunnel destination address identifies the third VPC.

In a possible implementation, when an IP address conflict exists between the second network and the third network, the gateway determines a first gateway interface based on the first tunnel identifier, and sends a service packet to the second network through the first gateway interface. The gateway determines a second gateway interface based on the second tunnel identifier, and sends a service packet to the third network through the second gateway interface, where the first gateway interface is different from the second gateway interface.

In the example shown in FIG. 4, when a service packet is transmitted between the first VPC and the second VPC or the third VPC, because the IP addresses of the second VPC and the third VPC are the same, the first VPC distinguishes between different VPCs based on different tunnel identifiers, and different tunnel identifiers correspond to different gateway interfaces. The NAT gateway separately sends a service packet to the second VPC and the third VPC through different gateway interfaces.

In the example shown in FIG. 4, the first VPC determines the tunnel identifier based on a target VPC to be sent, and performs tunnel encapsulation on the service packet based on the tunnel identifier. The NAT gateway can forward a service packet whose tunnel destination address is a first tunnel destination IP address to the second VPC, and forward a service packet whose tunnel destination address is a second tunnel destination address to the third VPC.

For example, when the first VPC sends a service packet to the second VPC, the first VPC performs tunnel encapsulation on the service packet based on the first tunnel destination address "11.1.0.4", to obtain a tunnel-encapsulated service packet, and sends the tunnel-encapsulated service packet to a NAT gateway corresponding to the first tunnel destination address "11.1.0.4". A format of a packet after tunnel encapsulation is shown in Table 9.

**Table 9**

| Tunnel source IP address | Tunnel destination IP address | VxLAN header | Source IP address: Port | Destination IP address: Port | Packet payload (payload) |
|---|---|---|---|---|---|
| 11.1.0.3 | 11.1.0.4 | ---- | 11.1.0.3:10000 | 11.1.0.101:443 | ---- |

In the example shown in FIG. 4, the NAT gateway performs tunnel decapsulation on the tunnel-encapsulated service packet, and translates, according to an SNAT rule, a source IP address of the service packet into a private IP address "11.1.0.102" in a private network environment in which the second VPC is located, and the NAT gateway sends the service packet obtained after the address translation to the second VPC.

In this embodiment of this application, in addition to identifying, by using the tunnel destination IP address, another VPC in which an address conflict exists, the cloud management platform can further identify, by using the virtual network identifier VNI, the another VPC in which the address conflict exists. The following provides descriptions with reference to the accompanying drawings.

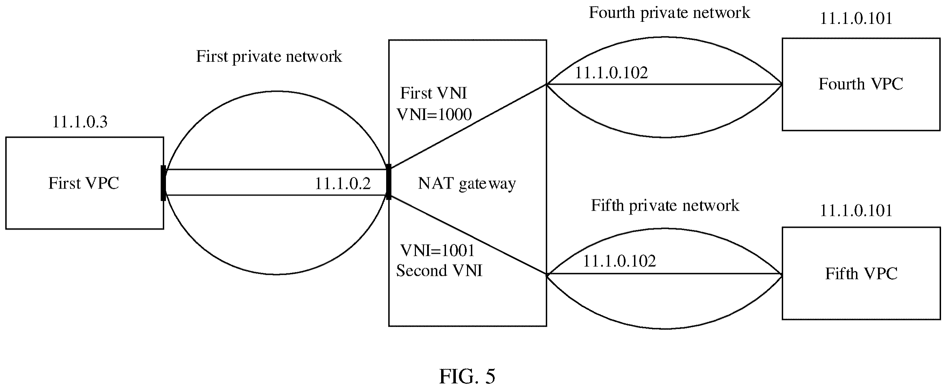

FIG. 5 is a diagram of another packet processing method based on a tunneling technology according to an embodiment of this application. In an example shown in FIG. 5, the first network is a first VPC, and the second network and the third network are respectively a fourth VPC and a fifth VPC. The first VPC, the fourth VPC, and the fifth VPC are in different network environments, and IP addresses of the fourth VPC and the fifth VPC are the same. For example, the IP addresses of the fourth VPC and the fifth VPC are both "11.1.0.101".

In the example shown in FIG. 5, when a service packet is transmitted between the first VPC and the fourth VPC or the fifth VPC, because the IP addresses of the fourth VPC and the fifth VPC are the same, the first VPC distinguishes between different VPCs based on different tunnel identifiers. For example, the tunnel identifiers include a first VNI and a second VNI, the first VNI is "1000", and the second VNI is "1001". The first VNI identifies the fourth VPC, and the second VNI identifies the fifth VPC.

In the example shown in FIG. 5, the first VPC determines the tunnel identifier based on a target VPC to be sent, and performs tunnel encapsulation on the service packet based on the tunnel identifier. The NAT gateway can forward the service packet to the fourth VPC based on the first VNI in the service packet after the tunnel encapsulation, and forward the service packet to the fifth VPC based on the first VNI in the tunnel-encapsulated service packet.

For example, when the first VPC sends a service packet to the fourth VPC, the first VPC performs tunnel encapsulation on the service packet based on the first VNI "1000", to obtain a tunnel-encapsulated service packet, and sends the tunnel-encapsulated service packet to the NAT gateway. A packet format of the service packet after the tunnel encapsulation is shown in Table 10.

**Table 10**

| Tunnel source IP address | Tunnel destination IP address | VxLAN header | Source IP address: Port | Destination IP address: Port | Packet payload (payload) |
|---|---|---|---|---|---|
| 11.1.0.3 | 11.1.0.2 | 1000 | 11.1.0.3:10000 | 11.1.0.101:443 | ---- |

In the example shown in FIG. 5, the NAT gateway performs tunnel decapsulation on the tunnel-encapsulated service packet, and translates, according to an SNAT rule, a source IP address of the service packet into a private IP address "11.1.0.102" in a private network environment in which the fourth VPC is located, and the NAT gateway sends the service packet obtained after the address translation to the fourth VPC.

In a possible implementation, a host in the first network includes a container, and the container uses a namespace (namespace) to implement network isolation. When the container is started, the container creates an independent network namespace for the container as a network environment of the container. Each network namespace has its own network interface, IP address, and routing table. A plurality of containers in the first network have different network environments. When a container in the first network sends a service packet to the second network, the container in the first network performs tunnel encapsulation on the service packet by using a network interface card of a host machine as a tunnel start point, and sends the encapsulated service packet to the NAT gateway.

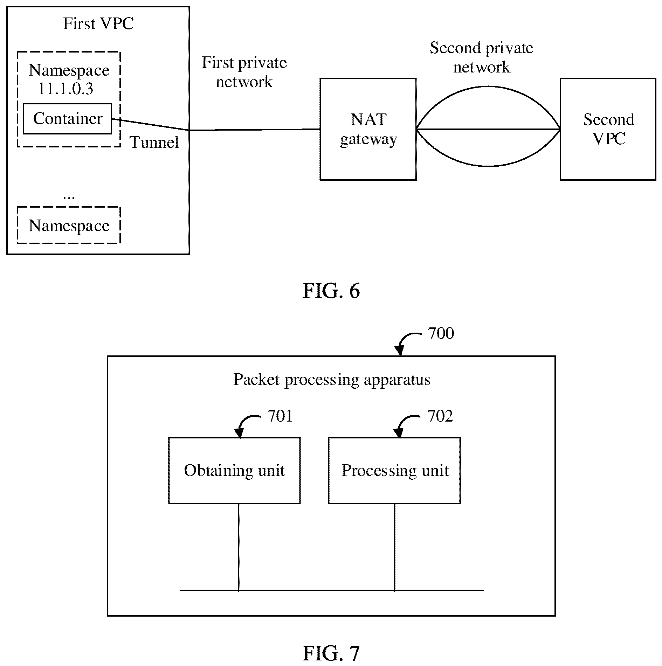

FIG. 6 shows a packet processing method based on a tunneling technology according to an embodiment of this application. In the embodiment shown in FIG. 6, an example in which the first network is a first VPC is used. The first VPC includes one or more containers, each container office has a respective namespace, and network isolation is implemented between different containers by using different namespaces. A container in the first VPC may perform tunnel encapsulation on a service packet based on a tunnel identifier, to transmit, through a tunnel, the service packet to a NAT gateway corresponding to the second network in which a network segment conflict exists.

For example, in the example shown in FIG. 6, when the container in the first VPC sends the service packet to the second network, the container in the first VPC performs tunnel encapsulation on the service packet by using a host network interface card as a tunnel start point, and sends the encapsulated service packet to the NAT gateway corresponding to the second network. The container in the first VPC may identify the second network based on a tunnel destination IP address, or may identify the second network based on a VNI. This is not specifically limited.

It can be learned from the foregoing embodiment that, in this embodiment of this application, the cloud management platform can process, based on the tunnel identifier, the service packet transmitted between the first network and the second network. Therefore, when a network segment conflict exists between the first network and the second network in different network environments, service packets can be routed to the NAT gateway for network address translation. This improves network connectivity when a network segment conflict exists in different network environments.

The foregoing describes the packet processing method based on a tunneling technology provided in embodiments of this application. The following specifically describes a packet processing apparatus provided in embodiments of this application.

FIG. 7 is a diagram of a structure of a packet processing apparatus according to an embodiment of this application. In the example shown in FIG. 7, the packet processing apparatus is configured to implement the steps performed by the cloud management platform in the foregoing embodiments. The packet processing apparatus 700 includes an obtaining unit 701 and a processing unit 702.

The obtaining unit 701 is configured to obtain first tunnel information, where the first tunnel information includes a first tunnel destination IP address, the first tunnel destination IP address is an IP address of the gateway, the cloud management platform is configured to manage an infrastructure that provides a cloud service, a first network is deployed on the infrastructure, and the first network and a second network are connected via the gateway, where a first host is deployed in the first network, a second host is deployed in the second network, and a network address conflict exists between the first network and the second network. The processing unit 702 is configured to establish a first tunnel between the first network and the gateway based on the first tunnel information, where a service packet generated in a running process of the first host is transmitted to the gateway through the first tunnel, and a destination IP address of the service packet is an IP address of the second host. The processing unit 702 is further configured to forward the service packet to the second host based on the first tunnel information and the IP address of the second host.

In a possible implementation, the first tunnel information further includes a first tunnel identifier, and the first tunnel identifier includes a tunnel destination IP address and/or a virtual network identifier VNI.

In a possible implementation, the second network is a public network, and the processing unit 702 is further configured to: translate a source IP address of the service packet into a public IP address based on the first tunnel identifier; and send the service packet to the second network based on the public IP address.

In a possible implementation, the second network is a private network, and the processing unit 702 is further configured to: translate a source IP address of the service packet into a private IP address of the second network based on the first tunnel identifier, and send the service packet to the second network based on the private IP address of the second network.

In a possible implementation, the first host is further configured to generate a service packet for accessing a third host, the third host is deployed in a third network, the third network is a private network, the first network and the third network are connected via a gateway, and a network address conflict exists between the second network and the third network. The processing unit 702 is further configured to send the service packet to the third network based on a second tunnel identifier, where the second tunnel identifier includes a tunnel destination IP address and/or a virtual network identifier VNI, and the second tunnel identifier is different from the first tunnel identifier.

In a possible implementation, the processing unit 702 is further configured to: determine a first gateway interface based on the first tunnel identifier, and send a service packet to the second network through the first gateway interface; and determine a second gateway interface based on the second tunnel identifier, and send a service packet to the third network through the second gateway interface, where the first gateway interface is different from the second gateway interface.

In a possible implementation, the first network includes a virtual private cloud VPC network.

In a possible implementation, the first host includes a virtual machine or a container.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all embodiments, and actions involved are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all preferred embodiments, and actions involved are not necessarily required in the present invention or this application.

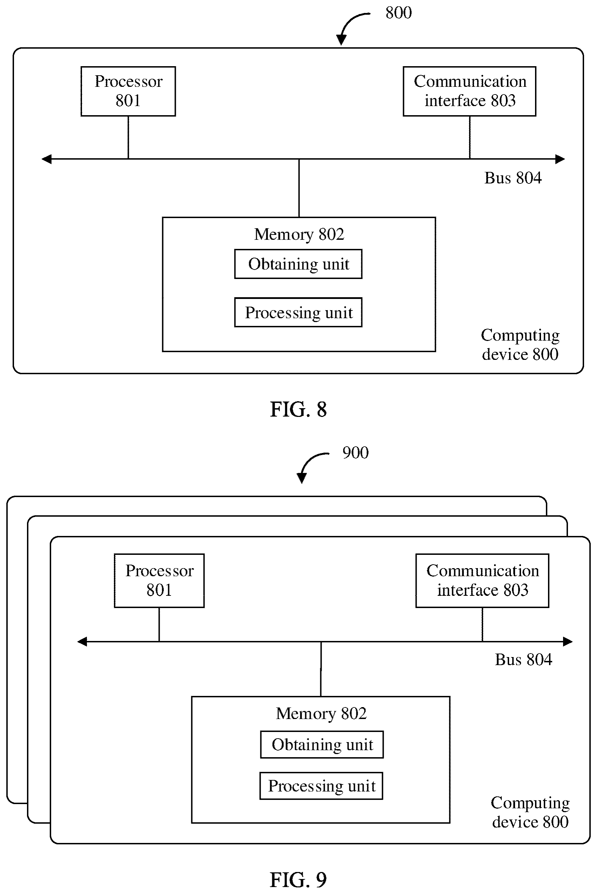

FIG. 8 is a diagram of a structure of a computing device according to an embodiment of this application. As shown in FIG. 8, a computing device 800 includes a processor 801, a memory 802, a communication interface 803, and a bus 804. The processor 801, the memory 802, and the communication interface 803 are coupled through a bus (not marked in the figure). The memory 802 stores instructions. When the executable instructions in the memory 802 are executed, the computing device 800 performs the method performed by the computing device in the foregoing method embodiments.

The computing device 800 may be one or more integrated circuits configured to implement the foregoing method, for example, one or more application-specific integrated circuits (application-specific integrated circuits, ASIC), one or more microprocessors (digital signal processors, DSP), one or more field programmable gate arrays (field programmable gate arrays, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, these units may be integrated together and implemented in a form of a system-on-chip (system-on-a-chip, SOC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores executable program code, and the processor 801 executes the executable program code to separately implement functions of the obtaining unit and the processing unit, so as to implement the foregoing packet processing method based on a tunneling technology. That is, the memory 802 stores instructions used to perform the foregoing packet processing method based on a tunneling technology.

The communication interface 803 uses a transceiver module, for example, but not limited to, a network interface card or a transceiver, to implement communication between the computing device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus can be classified into an address bus, a data bus, a control bus, and the like.

FIG. 9 is a diagram of a computing device cluster according to an embodiment of this application. As shown in FIG. 9, the computing device cluster 900 includes at least one computing device 800.

As shown in FIG. 9, the computing device cluster 900 includes at least one computing device 800. The memory 802 in the one or more computing devices 800 in the computing device cluster 900 may store same instructions used to perform the foregoing packet processing method based on a tunneling technology.

In some possible implementations, the memory 802 of each of the one or more computing devices 800 in the computing device cluster 900 may store some instructions used to perform the foregoing packet processing method based on a tunneling technology. In other words, a combination of one or more computing devices 800 may jointly execute instructions used to perform the foregoing packet processing method based on a tunneling technology.

It should be noted that memories 802 in different computing devices 800 in the computing device cluster 900 may store different instructions, which are separately used to perform some functions of the foregoing packet processing apparatus. In other words, the instructions stored in the memories 802 in different computing devices 800 may implement functions of one or more modules in the processing unit and the obtaining unit.

In some possible implementations, the one or more computing devices 800 in the computing device cluster 900 may be connected through a network. The network may be a wide area network, a local area network, or the like.

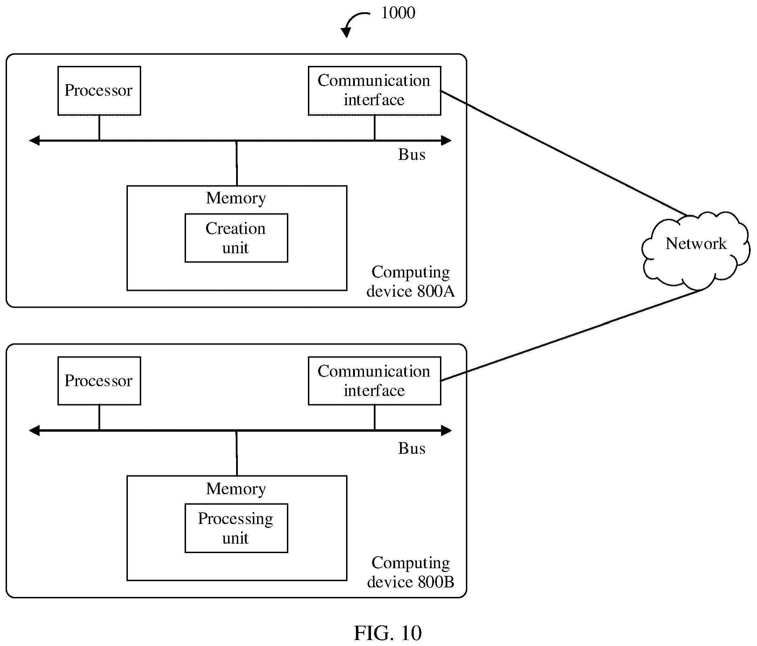

FIG. 10 is a diagram in which computer devices in a computer cluster are connected through a network according to an embodiment of this application. As shown in FIG. 10, two computing devices 800A and 800B are connected through a network. Specifically, each computing device is connected to the network through a communication interface in each computing device.

In a possible implementation, the memory in the computing device 800A stores instructions for performing a function of the obtaining unit. In addition, the memory in the computing device 800B stores instructions for performing a function of the processing unit.

It should be understood that functions of the computing device 800A shown in FIG. 10 may alternatively be completed by a plurality of computing devices. Similarly, functions of the computing device 800B may alternatively be completed by a plurality of computing devices as well.

In another embodiment of this application, a computer-readable storage medium is further provided. The computer-readable storage medium stores computer executable instructions. When a processor of a device executes the computer executable instructions, the device performs the method executed by the cloud management platform in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the cloud management platform in the foregoing method embodiments.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A packet processing method based on a tunneling technology, wherein the method comprises:
obtaining, by a cloud management platform, first tunnel information, wherein the first tunnel information comprises a first tunnel destination IP address, the first tunnel destination IP address is an IP address of a gateway, the cloud management platform is configured to manage an infrastructure that provides a cloud service, a first network is deployed on the infrastructure, and the first network and a second network are connected via the gateway, wherein a first host is deployed in the first network, a second host is deployed in the second network, and a network address conflict exists between the first network and the second network;
establishing, by the cloud management platform, a first tunnel between the first network and the gateway based on the first tunnel information, wherein a service packet generated in a running process of the first host is transmitted to the gateway through the first tunnel, and a destination IP address of the service packet is an IP address of the second host; and
forwarding, by the gateway, the service packet to the second host based on the first tunnel information and the IP address of the second host.

2. The method according to claim 1, wherein the first tunnel information further comprises a first tunnel identifier, and the first tunnel identifier comprises a tunnel destination IP address and/or a virtual network identifier VNI.

3. The method according to claim 2, wherein the second network is a public network, and the method further comprises:
translating, by the gateway, a source IP address of the service packet into a public IP address based on the first tunnel identifier; and
sending, by the gateway, the service packet to the second network based on the public IP address.

4. The method according to claim 2, wherein the second network is a private network, and the method further comprises:
translating, by the gateway, a source IP address of the service packet into a private IP address of the second network based on the first tunnel identifier; and
sending, by the gateway, the service packet to the second network based on the private IP address of the second network.

5. The method according to claim 4, wherein the first host is further configured to generate a service packet for accessing a third host, the third host is deployed in a third network, the third network is a private network, the first network and the third network are connected via the gateway, a network address conflict exists between the second network and the third network, and the method further comprises:
establishing, by the cloud management platform, a second tunnel between the first network and the gateway based on second tunnel information; and
sending, by the gateway, the service packet to the third network based on the second tunnel information, wherein the second tunnel information comprises a second tunnel identifier, the second tunnel identifier comprises a tunnel destination IP address and/or a virtual network identifier VNI, and the second tunnel identifier is different from the first tunnel identifier.

6. The method according to claim 5, wherein the method further comprises:
determining, by the gateway, a first gateway interface based on the first tunnel identifier, and sending the service packet to the second network through the first gateway interface; and
determining, by the gateway, a second gateway interface based on the second tunnel identifier, and sending the service packet to the third network through the second gateway interface, wherein the first gateway interface is different from the second gateway interface.

7. The method according to any one of claims 1 to 6, wherein the first network comprises a virtual private cloud VPC network.

8. The method according to any one of claims 1 to 7, wherein the first host comprises a virtual machine or a container.

9. A packet processing apparatus based on a tunneling technology, wherein the apparatus comprises:
an obtaining unit, configured to obtain first tunnel information, wherein the first tunnel information comprises a first tunnel destination IP address, the first tunnel destination IP address is an IP address of the gateway, the cloud management platform is configured to manage an infrastructure that provides a cloud service, a first network is deployed on the infrastructure, and the first network and a second network are connected via the gateway, wherein a first host is deployed in the first network, a second host is deployed in the second network, and a network address conflict exists between the first network and the second network; and
a processing unit, configured to establish a first tunnel between the first network and the gateway based on the first tunnel information, wherein a service packet generated in a running process of the first host is transmitted to the gateway through the first tunnel, and a destination IP address of the service packet is an IP address of the second host, wherein
the processing unit is further configured to forward the service packet to the second host based on the first tunnel information and the IP address of the second host.

10. The apparatus according to claim 9, wherein the first tunnel information further comprises a first tunnel identifier, and the first tunnel identifier comprises a tunnel destination IP address and/or a virtual network identifier VNI.

11. The apparatus according to claim 10, wherein the second network is a public network, and the processing unit is further configured to:
translate a source IP address of the service packet into a public IP address based on the first tunnel identifier; and
send the service packet to the second network based on the public IP address.

12. The apparatus according to claim 10, wherein the second network is a private network, and the processing unit is further configured to:
translate a source IP address of the service packet into a private IP address of the second network based on the first tunnel identifier; and
send the service packet to the second network based on the private IP address of the second network.

13. The apparatus according to claim 12, wherein the first host is further configured to generate a service packet for accessing a third host, the third host is deployed in a third network, the third network is a private network, the first network and the third network are connected via the gateway, a network address conflict exists between the second network and the third network, and the processing unit is further configured to:
establish a second tunnel between the first network and the gateway based on second tunnel information; and
send the service packet to the third network based on the second tunnel information, wherein the second tunnel information comprises a second tunnel identifier, the second tunnel identifier comprises a tunnel destination IP address and/or a virtual network identifier VNI, and the second tunnel identifier is different from the first tunnel identifier.

14. The apparatus according to claim 13, wherein the processing unit is further configured to:
determine a first gateway interface based on the first tunnel identifier, and send the service packet to the second network through the first gateway interface; and
determine a second gateway interface based on the second tunnel identifier, and send the service packet to the third network through the second gateway interface, wherein the first gateway interface is different from the second gateway interface.

15. The apparatus according to any one of claims 9 to 14, wherein the first network comprises a virtual private cloud VPC network.

16. The apparatus according to any one of claims 9 to 15, wherein the first host comprises a virtual machine or a container.

17. A computing device, comprising a processor, wherein the processor is coupled to a memory, and the processor is configured to store instructions, so that when the instructions are executed by the processor, the computing device is enabled to perform the method according to any one of claims 1 to 8.

18. A computing device cluster, comprising at least one computing device, wherein the computing device comprises a processor, the processor is coupled to a memory, the processor is configured to store instructions, and when the instructions are executed by the processor, the computing device cluster is enabled to perform the method according to any one of claims 1 to 8.

19. A computer-readable storage medium, wherein the computer-readable storage medium stores instructions, and when the instructions are executed, a computer is enabled to perform the method according to any one of claims 1 to 8.

20. A computer program product, wherein the computer program product comprises instructions, and when the instructions are executed, a computer is enabled to implement the method according to any one of claims 1 to 8.
